# EUROPEAN PATENT SPECIFICATION

(11) **EP 2 720 552 B1**
(45) Date of publication and mention of the grant of the patent: **13.07.2016**
(21) Application number: 12728753.0
(22) Date of filing: 14.06.2012
(51) Int. Cl.: A23L 5/30, A21D 6/00, A21D 15/06, A21D 13/06

(54) **PROCESS FOR THE MANUFACTURE OF A LEAVENED FOODSTUFF AND AN APPARATUS THEREFOR**
VERFAHREN ZUR HERSTELLUNG EINES GESÄUERTEN NAHRUNGSMITTELS UND VORRICHTUNG DAFÜR
PROCÉDÉ DE FABRICATION D'UN ALIMENT AU LEVAIN ET SON APPAREIL

(30) Priority: 14.06.2011 GB 201109917
(43) Date of publication of application: 23.04.2014
(73) Proprietor: Macphie of Glenbervie Limited, Drumlithie, Stonehaven AB39 3YG (GB)
(72) Inventor: TORRES-SANCHEZ, Carmen, Edinburgh EH14 4AS (GB); THAERON, Delphine, Drumlithie Stonehaven AB39 3YG (GB)
(74) Representative: Thomson, Craig Richard
(86) International application number: PCT/GB2012/051365
(87) International publication number: WO 2012/172353

(56) References cited:
- WO-A2-2007/054917
- WO-A2-2012/047092
- DE-A1- 19 831 635
- DE-C- 657 161
- DE-U1-202010 001 162
- JP-A- 6 014 694
- RU-C1- 2 266 654
- US-A- 3 503 343
- US-A1- 2002 083 845
- TAN M C ET AL: "Power ultrasound aided batter mixing for sponge cake batter", JOURNAL OF FOOD ENGINEERING, BARKING, ESSEX, GB, vol. 104, no. 3, 5 January 2011 (2011-01-05), pages 430-437, XP028154577, ISSN: 0260-8774, DOI: 10.1016/J.JFOODENG.2011.01.006 [retrieved on 2011-01-11]
- DATABASE FSTA [Online] INTERNATIONAL FOOD INFORMATION SERVICE (IFIS), FRANkFURT-MAIN, DE; BURADZHIEV P: "Effect of ultrasonic treatment on some pre-ferment characteristics in wheat dough preparation. (translated)", XP002682428, Database accession no. FS-1975-11-M-1260 & KHRANITELNA PROMISHLENOST, vol. 24, no. 4, 1 January 1975 (1975-01-01), page 26, KHRANITELNA PROMISHLENOST 1975
- DATABASE FSTA [Online] INTERNATIONAL FOOD INFORMATION SERVICE (IFIS), FRANkFURT-MAIN, DE; GANZUROVA I A ET AL: "An accelerated method of making bakery products, using ultrasonics. (translated)", XP002682429, Database accession no. FS-1974-08-M-1131 & KHLEBOPEKARNAYA I KONDITERSKAYA PROMYSHLENNOST', no. No. 11, 1 January 1973 (1973-01-01), page 42, KHLEBOPEKARNAYA I KONDITERSKAYA PROMYSHLENNOST' 1973 KONSTRUKTORSKO-TEKH. BYURO MINPISHCHEPROMA ESTONSKOI SSR, USSR
- DATABASE FSTA [Online] INTERNATIONAL FOOD INFORMATION SERVICE (IFIS), FRANkFURT-MAIN, DE; CHKHAIDZE R T ET AL: "More intensive fermentation of liquid dough by means of ultrasonics. (translated)", XP002682430, Database accession no. FS-1970-04-M-0291 & KHLEBOPEKARNAYA I KONDITERSKAYA PROMYSHLENNOST', vol. 13, no. 9, 1 January 1969 (1969-01-01), page 7, KHLEBOPEKARNAYA I KONDITERSKAYA PROMYSHLENNOST' 1969 GRUZINSKII NAUCHNO-ISSLED. INST. PISHCHEVOI PROMYSHLENNOSTI, USSR
- T.S. AWAD ET AL: "Applications of ultrasound in analysis, processing and quality control of food: A review", FOOD RESEARCH INTERNATIONAL, vol. 48, no. 2, 1 October 2012 (2012-10-01), pages 410-427, XP55036423, ISSN: 0963-9969, DOI: 10.1016/j.foodres.2012.05.004
- FARID CHEMAT ET AL: "Applications of ultrasound in food technology: Processing, preservation and extraction", ULTRASONICS: SONOCHEMISTRY, BUTTERWORTH-HEINEMANN, GB, vol. 18, no. 4, 26 November 2010 (2010-11-26), pages 813-835, XP028171989, ISSN: 1350-4177, DOI: 10.1016/J.ULTSONCH.2010.11.023 [retrieved on 2010-12-16]
- DATABASE WPI Week 199305 Thomson Scientific, London, GB; AN 1993-043359 XP002687639, -& SU 1 717 054 A1 (MARTYNYUK E N) 7 March 1992 (1992-03-07)

## Description

The present invention relates to a process for the manufacture of a leavened foodstuff, such as a leavened or heat treated leavened foodstuff, and the use of an apparatus for the same.

A leavening agent is added to compositions comprising flour and water, such as doughs and batters, to cause gas production, providing an aeration or a foaming action which lightens the texture and increases the volume of the finished food product. The leavening agent achieves this by generating gas which is retained in bubbles within the composition. The gas is initially dissolved in the composition. However, as the composition becomes saturated with the generated gas, nucleation of gas bubbles will occur and/or the gas produced by the leavening agent will diffuse into pre-existing gas pockets. Such pre-existing gas pockets may be formed as a result of the mixing of the ingredients in the composition. A matrix containing gas cells is thus formed by the leavening agent. These gas cells can expand as the leavening process progresses due to continuing gas production, resulting in an increase in volume of the composition. At this stage, the matrix can be fluid such that liquid within the composition can flow and gas can be exchanged between gas cells.

The leavening process may continue during the early stages of baking, until a temperature is reached at which the structure of the composition starts to change, ultimately fixing the gas pockets within a rigid and viscous cell structure. This sets the cell size and the expansion of the matrix slows down considerably. For instance during baking, starch containing compositions start to gelatinise around the gas cells at temperatures of about 60 °C.

Alternatively and/or additionally, during baking any gluten present may denature. As the temperature continues to increase, the matrix will harden locking the gas cells into the structure. In this way leavening agents can be used to generate gas to provide light and soft food products.

An uneven distribution of the position of the generated gas cells and/or an uneven volume distribution of the gas cells can impart undesirable characteristics to the finished food product, for instance leading to a coarse texture and irregular crumb, which can be unappealing to the consumer. This can occur, for instance, as a result of the uneven distribution of the ingredients in the composition, particularly that of the leavening agent, which can affect the size and position of the gas cells throughout the matrix of a leavened composition.

It is therefore an object of the present invention to address these problems by providing a process for the manufacture of a leavened food product with improved characteristics. The leavened food product may have more gas cells and/or a more homogeneous distribution of the positions of the gas cells and/or gas cells with a narrower volume distribution and/or higher volume of gas cells. The improved porosity can lead to a more appealing product having fine texture and crumb and improved volume.

This is achieved by applying ultrasound to the composition during one or both of the leavening and heat treating steps.

Khranitelna Promishlenost, vo. 24, no. 4, 1 January 1975, page 26 discloses the ultrasound treatment of wheat dough comprising flour, water and yeast with the pre-ferment either being treated with ultrasound and then its rising strength being determined directly, or being treated with ultrasound and then fermented.

In a first aspect, the present invention provides a process for the manufacture of a leavened foodstuff, wherein an ingredient composition comprising a food structurant selected from the group comprising protein, polymeric carbohydrate and hudrocolloid, water and a leavening agent, said ingredient composition being a dough or batter, is treated with ultrasound from an ultrasound source to modify the gas cell structure developing in the ingredient composition during at least a part of a leavening step to provide a leavened ingredient composition as the leavened foodstuff, wherein said ultrasound has a frequency in the range of from 20 kHz to 200 kHz and a power in the range of greater than 50 W to 1 kW and wherein when the leavening agent is a biological leavening agent, the leavening step further comprises the step of controlling the relative humidity of the environment surrounding the ingredient composition such that it is greater than 30%, and/or an ingredient composition comprising a food structurant selected from the group comprising protein, polymeric carbohydrate and hydrocolloid, water and a leavening agent, said ingredient composition being a dough or batter or a leavened ingredient composition having a gas cell structure and comprising a food structurant selected from the group comprising protein, polymeric carbohydrate and hydrocolloid and water, said leavened ingredient composition being a dough or batter is treated with ultrasound from an ultrasound source to modify the gas cell structure developing in the ingredient composition or to modify the gas cell structure of the leavened ingredient composition during at least a part of a heat treating step to provide a heat treated leavened foodstuff, wherein said ultrasound has a frequency in the range of from 20 kHz to 200 kHz and a power in the range of greaten than 50 W to 1 kW.

The leavening of an ingredient composition comprising a food structurant, water and a leavening agent generates gas bubbles within the composition to provide a foam of gas cells in a matrix formed by the food structurant and water. While not wishing to be bound by theory, irradiation of the foam structure with ultrasound induces pressure differences resulting from the sinusoidal nature of the ultrasonic soundwave causing the gas bubbles to alternatively expand and contract. As used herein, the terms 'gas cell' and 'gas bubble' are used interchangeably. When the ultrasound induces 'stable cavitation' of the gas bubbles within the matrix of the composition, they grow positively in resonance with the soundwave, such that a foam with an optimal gas bubble size distribution and an optimised average pore size is obtained.

It will be apparent that the leavening step produces the gas bubbles on which the ultrasound will act. The ultrasound can modify the gas cell structure developing in the ingredient composition. Ultrasound can act upon the gas cells to modify the cell size and narrow the distribution of cell sizes producing a more homogeneous cell structure. The spatial positioning of the cells in the matrix can also be made more homogeneous by the application of ultrasound. This means that even if there is an uneven distribution of ingredients, particularly the leavening agent which generates the gas to make the cells, the gas bubbles can be redistributed more evenly by the application of ultrasound. Thus, the modification the gas cell structure may comprise increasing the homogeneity of the gas cell structure. Consequently, after ultrasound treatment the cell distribution might not reflect the ingredient distribution in the matrix.

Upon heating, the matrix holding the gas cells is transformed, for instance by gelatinisation or denaturation, setting the improved gas bubble distribution within the composition. The application of ultrasound during heating modifies the gas cell structure developing in the ingredient composition or modifies the gas cell structure already present in a leavened ingredient composition. The ultrasound can enhance mass transfer of the gas from bubble to bubble. This allows the formation of bubbles of similar size i.e. the smallest bubbles grow, while the larges bubbles shrink. Thus, the modification of gas cell structure can comprise increasing the homogeneity of the gas cell structure. The cells will also compete for the finite amount of gas available, while the enhanced mass transfer enables a more equal distribution of gas between the cells, which can result in a more uniform pore size. This leads to a foodstuff with increased porosity and volume compared to one which had not been irradiated with ultrasound. This increased porosity is evident as improved texture and crumb, leading to a more appealing foodstuff.

The gas cell or gas bubble may comprise one or more of carbon dioxide , nitrogen and water vapour.

In one embodiment, when the ingredient composition is treated with ultrasound during one or both of the leavening step and the heat treating step, the ingredient composition can be in direct contact with the ultrasound source, and/or the ingredient composition can be in indirect contact with the ultrasound source such that there is at least one ultrasound coupling agent between the ingredient composition and the ultrasound source. The ultrasound coupling agent which is in direct physical contact with the ingredient composition is typically selected from one or more of the group comprising a gaseous medium, a liquid medium fit for human consumption and a solid medium.

Further disclosed is a process for the manufacture of a leavened foodstuff comprising at least:
- treating an ingredient composition comprising food structurant, water and a leavening agent with ultrasound from an ultrasound source to modify the gas cell structure developing in the ingredient composition during at least a part of a leavening step to provide a leavened ingredient composition as the leavened foodstuff and wherein when the leavening agent is a biological leavening agent, the leavening step further comprises the step of controlling the humidity of the environment surrounding the ingredient composition, and/or
- treating an ingredient composition comprising food structurant, water and a leavening agent or a leavened ingredient composition having a gas cell structure and comprising a food structurant and water with ultrasound from an ultrasound source to modify the gas cell structure developing in the ingredient composition or to modify the gas cell structure of the leavened ingredient composition during at least a part of a heat treating step to provide a heat treated leavened foodstuff.

As used herein, the term 'humidity' may refer to relative humidity i.e. the ratio of the partial pressure of water vapour in a mixture of water and air to the saturated vapour pressure of water in air, measured at a particular temperature and pressure, such as ambient temperature and pressure. In one embodiment, the step of controlling the humidity comprises controlling the relative humidity of the environment surrounding the ingredient composition such that it is greater than 30%, more typically in the range of from 70% to 90%, still more typically at about 85%. Leavening may be carried out at a temperature in a range of less than 60 °C, more typically from 20 to 50 °C, still more typically from 30 to 46 °C, yet more typically at about 38 °C. The relative humidity can be measured at the temperature and pressure at which leavening is carried out i.e. the leavening temperature and ambient pressure, for instance 38 °C and 1 atmosphere.

In another embodiment, the step of controlling the humidity of the environment surrounding the ingredient composition includes the active control of the humidity. In the present context, the term "active control" means that the humidity of the environment surrounding the ingredient composition is changed from that which it would have been if no active control were exercised. For instance, the active control of the humidity may comprise the step of altering the humidity of the environment surrounding the ingredient composition from an initial ambient level of humidity to a pre-determined level of humidity. The pre-determined level of humidity may be defined at a specific temperature and pressure, such as the leavening temperature and pressure, for instance 38 °C and 1 atmosphere. The initial ambient level and the pre-determined level of humidity should be different. The pre-determined level of humidity may be a relative humidity of greater than 30%, more typically in a range of from 70% to 90%, still more typically about 85% as discussed above.

The step of actively controlling the humidity may further comprise the step of maintaining the environment surrounding the ingredient composition at the pre-determined level of humidity. For instance, the environment surrounding the ingredient composition may be maintained at the pre-determined level of humidity for at least 25%, more typically at least 50% and still more typically at least 75% of the duration of the leavening step. As used herein, the term 'environment surrounding the ingredient composition' means the gaseous environment in contact with the ingredient composition. The ingredient composition may be present inside a chamber during the leavening step, such that the interior of the chamber holding the ingredient composition may constitute the environment surrounding the ingredient composition.

Further disclosed is a process for the manufacture of a leavened foodstuff, comprising at least the steps of:
- providing an ingredient composition comprising food structurant, water and a leavening agent;
- leavening the ingredient composition, typically to develop a gas cell structure, to provide a leavened ingredient composition, typically having a gas cell structure, as the leavened foodstuff, and typically wherein when the leavening agent is a biological leavening agent, leavening further comprises controlling the humidity of the environment surrounding the ingredient composition;
wherein the ingredient composition is subjected to ultrasound treatment from an ultrasound source during at least a part of the leavening step, typically to modify the gas cell structure of the ingredient composition.

In one embodiment, during the ultrasound treatment the ingredient composition is in direct contact with the ultrasound source, and/or the ingredient composition is in indirect contact with the ultrasound source such that there is at least one ultrasound coupling agent between the ingredient composition and the ultrasound source and wherein the ultrasound coupling agent which is in direct physical contact with the ingredient composition is selected from one or more of the group comprising a gaseous medium such as air, a liquid medium fit for human consumption such as water, a cooking oil for example vegetable oil or glycerine, and a solid medium, such as a plastic, ceramic, metal or alloy.

It is preferred that the ultrasound coupling agent in direct physical contact with the ingredient composition should not be any medium which would adversely effect the characteristics of the leavened foodstuff. If the coupling agent is a liquid medium fit for human consumption, the liquid medium may be selected from the group comprising water, vegetable oil and glycerine. If the liquid medium fit for human consumption comprises water, it typically comprises at least 25 wt% water, more typically at least 50 wt% water. In some circumstances the liquid medium may be liquid water, or an air/steam mixture.

Further disclosed is a process for the manufacture of a heat treated leavened foodstuff, comprising at least the steps of:
- providing an ingredient composition comprising food structurant, water and a leavening agent or a leavened ingredient composition, typically having a gas cell structure and comprising food structurant and water, typically obtained therefrom;
- heat treating the ingredient composition, typically to develop a gas cell structure in the ingredient composition, to provide a heat treated leavened composition as the heat treated leavened foodstuff and/or heat treating the leavened ingredient composition, typically obtained therefrom, to provide a heat treated leavened ingredient composition as the heat treated leavened foodstuff;
wherein the ingredient composition or the leavened ingredient composition, typically obtained therefrom, is subjected to ultrasound treatment during at least a part of the heat treating step, typically to modify the gas cell structure of the composition.

In one embodiment, the food structurant may be one or more compounds selected from a polymeric carbohydrate, such as starch, for instance starch derived from wheat or maize, cellulose, a protein such as albumin, gluten, or gelatin and a hydrocolloid such as a gum, for instance xanthan, guar or locust bean gums. These compounds may be present in one or more components of the ingredient composition, such as a flour.

In an embodiment in which the food structurant comprises gluten, the ingredient composition, or the leavened ingredient composition, typically a leavened ingredient composition obtained therefrom, may be subjected to ultrasound treatment during the heat treating step until the composition temperature is at least 60°C, more typically at least 70°C, still more typically at least 80°C. This ensures that the ultrasound is applied at least until the initiation of the denaturisation of the gluten, in order to retain the improved cell structure in the matrix.

In another embodiment, the ingredient composition does not comprise gluten. Consequently the food structurant may be one or more compounds selected from a polymeric carbohydrate, a protein excluding gluten and a hydrocolloid. In such a case, the food structurant may be selected from one or more of starch, albumin, cellulose, and gum, for instance xanthan, guar or locust bean gums.

In a further embodiment, the ingredient composition may further comprise one or more ingredients selected from the group comprising carbohydrate, such as a sugar or starch, salt, dairy components such as milk solids, shortening agent such as fat or vegetable oil and protein, for instance albumin or casein.

The ingredient composition is a dough or a batter.

From the forgoing, it will be apparent that leavening, which generates a gas cell structure in the ingredient composition, may occur during the heat treating step, such that after heat treating, the composition is both leavened and heat treated. Subjecting an ingredient composition comprising food structurant, water and a leavening agent to ultrasound treatment during at least a part of the heat treating step can modify the gas cell structure being generated in the ingredient composition during the heat treating step. Subjecting a leavened ingredient composition having a gas cell structure and comprising a food structurant and water to ultrasound treatment during at least a part of the heat treating step can modify the gas cell structure of the leavened ingredient composition. The heat treated leavened ingredient composition can comprise a modified gas cell structure, compared to the gas cell structure of the leavened ingredient composition or the structure of the ingredient composition.

In one embodiment, the leavened ingredient composition is obtained from the ingredient composition. Thus, the leavened ingredient composition can be obtained from an ingredient composition comprising food structurant, water and a leavening agent by the step of leavening the ingredient composition to develop a gas cell structure in the ingredient composition to provide the leavened ingredient composition having a gas cell structure and comprising a food structurant and water. Thus, in a further embodiment, the leavened ingredient composition may be provided by the steps of:
- providing an ingredient composition comprising food structurant, water and a leavening agent; and
- leavening the ingredient composition, typically to develop a gas cell structure in the ingredient composition, to provide a leavened ingredient composition, typically having a gas cell structure and comprising food structurant, water and optionally any remaining leavening agent.

In one embodiment, the leavening step may comprise processing the ingredient composition under conditions suitable for the leavening agent to generate a gas to aerate and/or foam the ingredient composition. This can be achieved by leaving the ingredient composition for a period of time, the so-called "leavening period". Typically no mechanical manipulation of the ingredient composition which can change the gas cell structure developing in the ingredient composition occurs during the leavening step. More typically, no mechanical manipulation of the ingredient composition occurs during the leavening step.

The term 'remaining leavening agent' represents leavening agent present in the composition after the leavening step, either because it was not consumed in the leavening process, such as unreacted chemical leavening agent or because it is a biological leavening agent which may have multiplied during the leavening process.

In a further embodiment, the ingredient composition may be subjected to ultrasound treatment during at least a part of the leavening step i.e. as well as during at least a part of the heat treatment step. Typically, the ultrasound can be applied during at least the final 25%, by duration, of the leavening step. More typically, the ultrasound can be applied during at least the final 50%, by duration, of the leavening step. Optimally, the ultrasound can be applied during the final 25%, by duration, of the leavening step.

In one embodiment, the leavening agent in the ingredient composition may be one or both of a biological leavening agent and a chemical leavening agent. Typically, the biological leavening agent may be one or more selected from the group comprising a yeast, such as one of the genus Saccharomyces, and a bacterium such as one of the lactic acid or acetic acid bacteria.

In another embodiment, the leavening agent in the ingredient composition may be a chemical leavening agent. In one embodiment, the chemical leavening agent may be a heat activated chemical leavening agent such as ammonium bicarbonate, such that the ingredient composition may generate gas by heating, for instance as part of a heat treating step to provide a heat treated leavened foodstuff.

In another embodiment, the chemical leavening agent may be a water activated chemical leavening agent, such as agents which are activated under a combination of water and heat like sodium aluminium pyrophosphate, and agents which are activated under an acidic aqueous environment, like sodium bicarbonate.

Typically, the chemical leavening agent may be one or more selected from the group comprising ammonium bicarbonate, potassium bicarbonate, sodium bicarbonate, potassium bitartrate, potassium carbonate, monocalcium phosphate, sodium acid pyrophosphate, sodium aluminium pyrophosphate, di-calcium dihydro phosphate and hydrogen peroxide.

The chemical leavening agent may further comprise an acidic compound, such as an organic acid, for instance for water activated chemical leavening agents like bicarbonates.

If a heat activated chemical leavening agent is present, the ingredient composition will undergo leavening mainly during the heat treating step to provide a heat treated leavened foodstuff.

In yet another embodiment, the heat treating step may be a baking step, such as a part-baking step or a full baking step to provide a part-baked or fully-baked leavened foodstuff respectively as the heat treated leavened foodstuff. It may be desirable to only part-bake the leavened foodstuff, particularly where the part-baked product is then frozen for storage and/or transport. In this case, the part-baked product can then be further heat treated, for instance at a location different from where it was part-baked, to provide the fully-baked, finished, foodstuff.

In another embodiment, the leavening step is carried out without any mechanical manipulation to change the gas cell structure developing in the ingredient composition, and/or heat treating step is carried out without any mechanical manipulation to change the gas cell structure developing in the ingredient composition or to change the gas cell structure of the leavened ingredient composition. For instance, mechanical manipulation of the ingredient composition or leavened ingredient composition may be carried out which does not affect the developing gas cell structure or gas cell structure respectively. Typically such mechanical manipulation may comprise one or both of rotating the ingredient composition or leavened ingredient composition to alter its shape or cutting the ingredient composition or leavened ingredient composition. However, the leavening step may be carried out without any mechanical manipulation of the ingredient composition and/or the heat treating step may be carried out without any mechanical manipulation of the ingredient composition or leavened ingredient composition.

In yet another embodiment, the leavening step and/or heat treating step may be carried out without transferring any mechanical energy to the ingredient or leavened ingredient composition respectively.

In a further aspect, the use of_a proofing apparatus, typically for an ingredient composition, is provided. Such a proofing apparatus is of particular benefit when the leavening agent is a biological leavening agent. The proofing apparatus may comprise at least a chamber for an ingredient composition, means for controlling the temperature of the chamber, means for controlling the humidity in the chamber and an ultrasound source for transmitting ultrasound to the chamber, wherein said ultrasound has a frequency in the range of from 20 kHz to 200 kHz and a power in the range of greater than 50 W to 1 kW. Typically the proofing apparatus may further comprise a source of heating and/or cooling and a source of humidity.

The chamber is an enclosure for receiving the ingredient composition. The means for controlling the temperature of the chamber may comprise a heating element. The means for controlling the humidity in the chamber may comprise a fluid reservoir, typically for water. A fan can be provided configured to circulate air in the chamber. Means may be provided to vaporise the fluid in the reservoir, typically to provide water vapour. The heating element can be configured to heat the fluid in the fluid reservoir. Alternatively, the fluid may be vaporised by an ultrasound source, which can be the same as or different to the ultrasound source for transmitting ultrasound to the chamber. A flow of air can be passed over the fluid reservoir, typically by another fan, and passed to the chamber in order to alter the humidity in the chamber. One or both of temperature and humidity sensors may also be present configured to determine the temperature and humidity respectively within the chamber.

In a further embodiment, the chamber may have an internal volume. The internal volume of the chamber may define the environment surrounding the ingredient composition. The chamber may have an internal volume of greater than 0.015 m³, more typically greater than 0.125 m³, still more typically greater than 0.250 m³.

A controller can be connected to one or more of the fans, the heating element or ultrasound source for the fluid reservoir and one or both of the temperature and humidity sensors to maintain a predetermined temperature and humidity within the chamber. For instance the temperature sensor may be a thermocouple connected to the controller and/or the humidity sensor may be a hygrometer connected to the controller.

Typically the controller is set to maintain the temperature and humidity of the chamber within pre-determined ranges when operational. For instance, the pre-determined temperature for the chamber may be in a range of less than 60°C, more typically from 20 to 50°C, still more typically from 30 to 46°C, yet more typically about 38°C. The predetermined relative humidity for the chamber may be greater than 30%, more typically in a range of from 70% to 90%, still more typically about 85%. The relative humidity values referred to herein can be measured at the pre-determined temperature and ambient pressure, for instance at a temperature of 38°C and a pressure of 1 atmosphere.

The ultrasound source, such as an ultrasonic disc, plate or horn, is typically a transducer which converts electrical energy into kinetic energy. The ultrasound source may comprise a piezoelectric material sandwiched between metal electrodes. The application of an alternating electrical current through the metal electrodes causes the piezoelectric material to expand and contract because of the piezoelectric effect. These mechanical contractions and expansions can be transferred to an extender such as a metal rod which is attached to the piezoelectric crystal.

The ultrasound treatment in the process and/or apparatus disclosed herein have a frequency in the range of from 20 kHz to 200 kHz, still more typically in the range of from 25 kHz to 60 kHz, even more typically in the range of from 25 kHz to 35 kHz. The ultrasound may be applied as a single emitting frequency or as a varying frequency, for example sweeping between a lower and upper limit of a frequency range such as from 25 to 35 kHz. The single or varying frequency ultrasound may be pulsed, for instance at 5, 10, 15 or even 30 second pulses with similar intervals in which the ingredient composition is not subject to ultrasound or may be applied in a continuous manner.

The power of the ultrasound treatment is greater than 50 Watts and may be up to 1 kW, more typically in the range of 150 to 350 Watts, still more typically about 250 Watts. The ultrasound source may be in contact with the ingredient composition, for instance if the ingredient composition is placed on a plate or in a container which forms part of the ultrasound source. In other embodiments one or more ultrasound coupling media, such as air, the carrier on which the ingredient composition is held or a liquid medium fit for human consumption, may be present in the apparatus to transmit the ultrasound from the source to the ingredient composition.

For instance, the ultrasound may be directly transmitted to the chamber. In one embodiment the ultrasound source is connected to one or more of a chamber base, a chamber side and a chamber ceiling. It will be apparent that should the ultrasound be transmitted to, for instance the sides and/or ceiling of the chamber, it can then be passed to the foodstuff via an ultrasound coupling medium such as air present in the chamber. Alternatively, the ultrasound may be transmitted to a suitable ingredient composition carrier, such as a tray, in which the ingredient composition is transferred to the proofer and biologically leavened.

In a further aspect, the use of a heat treating apparatus, typically for the manufacture of a heat treated leavened foodstuff, is provided. The heat treating apparatus may comprise at least a chamber for an ingredient composition, means for heating the chamber, means for controlling the temperature of the chamber, an ultrasound source for transmitting ultrasound to the chamber and a control system, said control system configured to transmit ultrasound to the chamber from the ultrasound source during at least a portion of the heating of the chamber by said means for heating the chamber.

In one embodiment, the means for controlling the temperature of the chamber may comprise a temperature sensor to measure the temperature inside the chamber. In a further embodiment, the control system may be configured to transmit ultrasound to the chamber when the temperature inside the chamber is greater than 30 °C, more typically greater than 40 °C, still more typically greater than 50 °C and even more typically greater than 60 °C.

In a further embodiment, the chamber may have an internal volume. The chamber may have an internal volume of greater than 0.015 m³, more typically greater than 0.125 m³, still more typically greater than 0.250 m³. The internal volume of the chamber may define the environment surrounding the ingredient composition.

The apparatus may further comprise an ultrasound coupling medium. For instance, when the heat treating apparatus is a fryer, the ultrasound coupling medium may be a cooking oil, such as a vegetable oil.

The heat treating apparatus may be selected from any known heating apparatus used in the preparation of a partly or fully cooked foodstuff. For instance, the heat treating apparatus may be an oven such as domestic oven or an industrial oven, a steamer and a fryer, such as a deep fat fryer. As used herein, the term "domestic oven" is intended to include bread ovens and bread makers. Examples of industrial ovens include travelling, rack and deck ovens.

The aforementioned apparatus all contain an ultrasound source. The ultrasound source may be similar to that described above for the proofing apparatus.

In one embodiment in which the heat treating apparatus is a breadmaker, such as a domestic breadmaker which mixes the ingredients and then bakes the bread, the ingredient composition may be placed in a loaf tin which is directly connected to the ultrasound source. In another embodiment in which the heat treating apparatus is a fryer, such as a deep fat fryer having a base and at least one side, the ultrasound source may be placed in one or both of the base and sides. In this case, the ultrasound would be transmitted to the ingredient composition by the cooking oil present in the fryer, which functions as a liquid ultrasound coupling media. In a still further embodiment, the heat treating apparatus may be a domestic or industrial oven comprising one or more oven chambers. The oven chamber may comprise one or more trays for holding the ingredient composition. The ultrasound source may be in contact with one or more oven chambers, and/or the one or more trays, and/or may transmit the ultrasound to the ingredient composition through air as an ultrasound coupling medium.

In another embodiment, the control system can be configured such that the ultrasound is transmitted to the chamber (during at least a portion of the heating of the chamber) when the ingredient composition is present in the chamber. Typically, the control system can be configured such that there is no transmission of ultrasound to the chamber when no ingredient composition is present. In some embodiments, the chamber can be heated without the presence of an ingredient composition and/or the transmission of ultrasound to allow for the pre-heating of the chamber prior to the introduction of the ingredient composition. The ingredient composition may be capable of producing a gas cell structure under heat treatment and/or may be a leavened ingredient composition having a gas cell structure.

The process of the present invention is particularly useful when applied to ingredient compositions of high viscosity, such as some gluten-free or lower water content compositions. High viscosity ingredient compositions are known to exhibit inadequate lift during leavening and heat treating. The matrix may set too quickly because the gas cells do not have sufficient time to form and distribute within the high viscosity matrix. This can lead to significant heterogeneity in terms of the spatial and size distribution of the gas cells. These problems can be mitigated against, to some extent, by increasing the concentration of leavening agent and/or structurant in the ingredient composition to provide more lift. Advantageously, it has been found that the application of ultrasound can lower the viscosity of the ingredient composition increasing mass transfer between the cells, promoting a more homogeneous cell structure, thereby also addressing these problems.

Ingredient compositions which are gluten-free do not comprise the gluten protein which normally provides elasticity to the matrix forming the walls of the gas cells. This can result in poor retention of the gas generated in the leavening step, producing an inferior expansion of the volume of the composition and a denser and less palatable texture to the crumb of the finished food product. However, the use of ultrasound during the leavening and/or heat treating steps may compensate for some of this deficit by increasing the flexibility of the matrix by shear-thinning, thereby decreasing the viscosity. This can enhance the mass transfer of the gas from cell to cell, retarding the collapse of the viscoelastic matrix, particularly if it has insufficient elasticity, such as when a gluten-free composition is used. In addition, more bubbles are formed which have smaller sizes because they may interchange gas more easily in the presence of ultrasound.

The porosity of lower water content ingredient compositions, particularly those with water contents in the range of greater than 80% to less than 100% by weight, based upon the water content of an ingredient composition without a reduced water content, more particularly those having a water content from 90% to less than 100%, have been found to be improved by the application of ultrasound during one or both of the leavening and heat treating steps.

For instance, the mass of water in a regular ingredient composition is typically 60 to 75 wt.% of the mass of a flour structurant. This means that low water content ingredient compositions may comprise 48 to <75 wt.% of the mass of a flour structurant. A typical ingredient composition for use in making bread may have a water:flour ratio of 1:1.56 by weight. A low water content ingredient composition may have a water:flour ratio of 0.9:1.56 by weight, representing a 10% by weight reduction in the water content.

Without the application of ultrasound, the matrix of gluten-free and lowered water content ingredient compositions would be less elastic and more brittle, compared to the corresponding gluten-containing ingredient composition or an ingredient composition which does not have a lower water content. As a result, such compositions may be more prone to the formation of large isolated bubbles produced by the collapse of neighbouring bubbles. Such a localised collapse may be the result of the shockwave produced by the bursting of as little as a single bubble.

For the avoidance of doubt, embodiments of the invention discussed herein may be applicable to any and all aspects of the invention, and not just the aspect of the invention with which they may be discussed.

Embodiments of the present invention will now be described by way of example only and with reference to the accompanying non-limited drawings in which:
Figure 1 is a diagrammatic scheme of a leavening apparatus for the manufacture of a leavened foodstuff as described herein.
Figure 2 is a diagrammatic scheme of a frying apparatus for the manufacture of a fried leavened foodstuff as described herein.
Figure 3 is a diagrammatic scheme of a baking apparatus for the manufacture of a baked leavened foodstuff as described herein.
Figure 4 shows graphs of the cell count results for cross-sections of bread loaves, made from a conventional ingredient composition, subjected to different durations and powers of ultrasound during leavening and/or baking versus a control which was not subjected to any ultrasound treatment.
Figure 5 shows graphs of the results of granulometry analyses for cross-sections of bread loaves, made from a conventional ingredient composition, subjected to different durations and powers of ultrasound during leavening and/or baking versus a control which was not subjected to any ultrasound treatment.
Figure 6 shows graphs of the cell count results for cross-sections of bread loaves, made from a conventional ingredient composition (100% water) and an ingredient composition with 10 wt.% less water, subjected to different powers of ultrasound during leavening and baking versus a control which was not subjected to any ultrasound treatment.
Figure 7 shows graphs of the results of granulometry analyses for cross-sections of bread loaves, made from a conventional ingredient composition (100% water) and an ingredient composition with 10 wt.% less water, subjected to different powers of ultrasound during leavening and baking versus a control which was not subjected to any ultrasound treatment.
Figure 8 shows graphs of the results of granulometry analyses for cross-sections of bread loaves, made from a gluten-free ingredient composition, subjected to different durations and powers of ultrasound during leavening and/or baking versus a control which was not subjected to any ultrasound treatment.
Figure 9 shows graphs the cell count results for cross-sections of scones, made from a conventional ingredient composition having a chemical leavening agent, subjected to ultrasound during baking versus a control which was not subjected to an ultrasound treatment.
Figure 10 shows graphs of the results of granulometry analyses for cross-sections of scones, made from a conventional ingredient composition having a chemical leavening agent, subjected to ultrasound during baking versus a control which was not subjected to any ultrasound treatment.

As used herein, the term "ultrasound" refers to sound pressure, particularly cyclic sound pressure, preferably with a frequency in the range of from 18 kHz to 300 MHz, more preferably in the range of from 20 kHz to 200 kHz. A composition which has undergone an ultrasound treatment can be referred to as "sonicated", while the application of ultrasound can be referred to as "sonication".

If the ingredient composition is not in direct contact with the ultrasound source, the ultrasound may have to pass through one or more media, termed herein "ultrasound coupling agents" to reach the composition. The ultrasound coupling agent may be a gas, a liquid medium fit for human consumption or a solid. Examples of gaseous media include air. Examples of solid media include plastics, ceramics, metals and alloys, for instance in the form of trays and tins. By "fit for human consumption" it is meant a liquid medium which is not injurious for health. Examples of liquid media fit for human consumption include water, cooking oils such as vegetable oils and glycerine. Liquid media unfit for human consumption, which should therefore not be used as coupling agents, for example due to toxicity or for other reasons include alkanes such as paraffin oil.

As used herein, the term "foodstuff" means a substance or composition that can be used, or prepared for use, as food.

The ingredient composition comprises a food structurant. As used herein, the term "food structurant" means an edible ingredient which, after heat treating, changes form to provide the ingredient composition with a more fixed cell structure. In the baking process, the change in form may occur as a result of one or more of denaturing, cross-linking, gelatinisation, dehydration and hydrogen bonding. One well known example is the denaturisation of gluten upon baking to provide a rigid and viscous matrix around gas cells. The food structurant may be part of another ingredient in the ingredient composition, for instance starch food structurants may be part of a flour component of an ingredient composition.

As used herein, the term "flour" is intended to mean a powder obtained from grinding one or more of cereal grain, other seed or root. Typical cereal grains include wheat, maize, rice and rye.

As used herein, the term "leavening" refers to a step in the manufacture of a foodstuff during which the ingredient composition is left for a period of time for gas generation and cell expansion to take place. Typically one or more of gas formation and release, aeration and foaming occurs in the ingredient composition as a result of the action of the leavening agent. Leavening can be carried out under conditions appropriate to enable the leavening agent to generate gas within the ingredient composition, typically to provide a foam. Leavening does not typically involve any mechanical manipulation of the ingredient composition, for instance such that there is no mixing, kneading, folding and/or extrusion etc. which would disrupt the gas cell formation. As used herein, leavening can refer to the period of time when the ingredient composition is left, e.g. after shaping, but prior, particularly immediately prior, to heat processing.

Leavening can be carried out before, or as part of the heat treating step. For instance, in the manufacture of bagels, the ingredient composition in the form of a dough may be boiled during leavening to provide a crust. Furthermore, when a heat activated chemical leavening agent is present, gas generation and cell expansion can occur during the heating of the ingredient composition.

As used herein, a "leavened ingredient composition" or a "leavened foodstuff" is one which has undergone the leavening process. Thus, a leavened ingredient composition obtained from an ingredient composition comprising a food structurant, water and a leavening agent is the result of leavening the ingredient composition.

As already discussed, the leavening agent may be a biological leavening agent or a chemical leavening agent. Without wishing to be bound by theory, it is thought that the application of ultrasound during the leavening of an ingredient composition is optimal during the final stages of leavening, such as during at least the final 25%, by duration, of the leavening step, because this is when the gas cell structure is most developed. Application of ultrasound during the early stages of leavening is less efficient because the gas cell structure is less developed and gas is continually being generated.

When the leavening agent is a biological agent, this leavening process is also known as proofing. Biological leavening agents are microorganisms that can release gases, typically carbon dioxide, to leaven ingredient compositions. For instance, types of yeast, such as baker's yeast can act on the ingredient composition through fermentation, thereby biologically changing the chemistry of the composition.

Chemical leavening agents can be compounds or compositions which release gases, such as carbon dioxide upon activation. Activation typically occurs upon contact with moisture and/or heat. For instance, carbon dioxide gas can be generated by the action of an acid, such as a low molecular weight organic acid, and an alkali which can liberate carbon dioxide upon neutralisation. Alternatively, the chemical leavening agent may be a compound which undergoes thermal decomposition, typically at those temperatures used in the heat treating step. Without activation by the appropriate stimulus, such as contact with moisture and/or heat, the rate of generation of gas by a chemical leavening agent is negligibly small. It is only upon activation during the leavening step that the rate of generation of gas is sufficient to develop the gas cell structure in the ingredient composition. Once a gas cell structure begins to develop during leavening, this can then be modified by the application of ultrasound.

When the leavening agent is a chemical leavening agent, it may or may not be entirely consumed in the leavening step. Consequently, leavening agent may be present during subsequent processing steps, such as during a heat treating step. Thus, the generation of gas by the leavening agent may continue in a subsequent processing step, such as during heat treating.

It is preferred that the ingredient composition, particularly the leavened ingredient composition, is not a laminated structure. For instance laminated structures comprising dough and fat, such as in puff pastry, croissants and Danish pastries, achieve expansion upon baking largely due to the effect of heat on gas trapped by the interlayering of fat and dough rather than from the generation of gas during leavening and optionally heat treating.

The term "heat treating" is intended to encompass any treatment resulting in an increase in temperature which can bring about a change in the food structurant to retain a cell structure, typically a matrix holding gas bubbles, in the ingredient composition or leavened ingredient composition. The heat treating may, for example, comprise one or more of baking, either fully or partially, boiling, poaching, steaming, frying and grilling. The heat treatment can affect the structurant in the ingredient or leavened ingredient composition to maintain a particular cell structure upon cooling to room temperature. This can be achieved by, for instance, the denaturing or cross-linking of the structurant to retain a particular gas cell structure, and can be associated with a loss of fluidity and/or elasticity of the matrix.

Heat treating of an ingredient composition comprising a chemical leavening agent or a leavened ingredient composition, even without the application of ultrasound, retains the gas cell structure generated upon heating or present in the leavened ingredient composition. However, heating alone is unable to redistribute the gas between the gas cells in the matrix, which would modify the gas cell structure during the heat treatment. In order to control the modification of the gas cell structure, the application of ultrasound is required. Without wishing to be bound by theory, it is thought that the application of ultrasound during the heat treating of a leavened ingredient composition, which already comprises a gas cell structure, can redistribute the gas to provide a more homogeneous structure. In this case, the gas cells are competing for a constant amount of gas because leavening has already occurred.

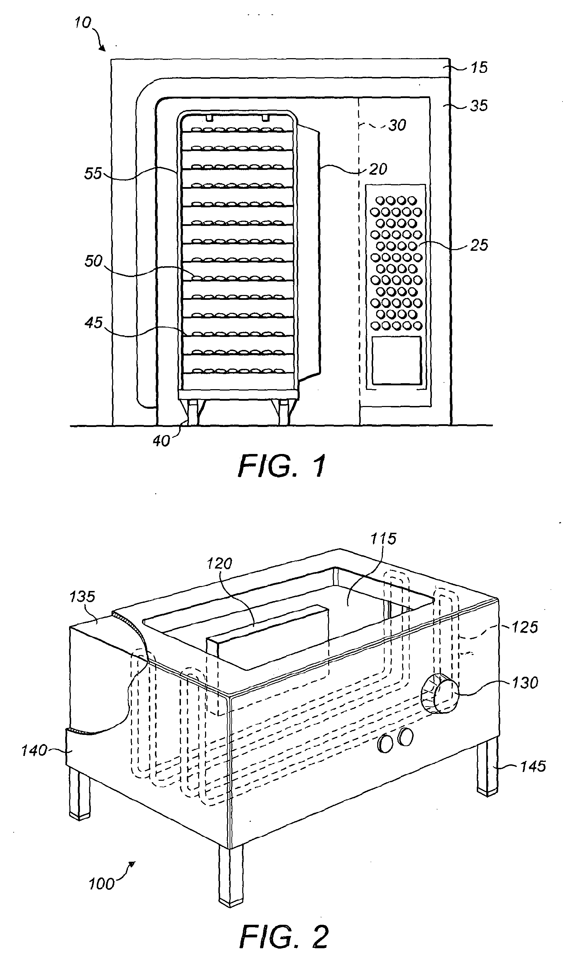

Figure 1 shows a schematic diagram of a proofing apparatus, particularly an industrial proofing apparatus 10. Such a proofing apparatus can be used when the leavening agent in the ingredient composition is a biological leavening agent. The proofing apparatus provides the conditions, typically the optimal conditions, necessary for the biological leavening agent to generate gas which forms the cell structure in the composition.

The proofing apparatus 10 comprises a proofing chamber 15 including an insulating layer 35, a combined heat and humidity source 25, and an ingredient composition container 55. The proofing chamber 15 further comprises a door (not shown) allowing the removal of the ingredient composition container 55 and may optionally further comprise a separator 30 between the combined heat and humidity source 25 and ingredient composition container 55. If present, the separator 30 may be a heat and humidity permeable wall, such as a grille, mesh or the like, which allows the transmission of the humidity from the combined heat and humidity source 25 to the ingredient composition container. Although a combined heat and humidity source 25 is shown in Figure 1, these functions can be provided as separate units, namely independent heat and humidity generation sources. The combined source or independent sources have associated temperature and humidity sensors within the proofing chamber and can be connected to a control system to allow the control of the temperature and humidity within the chamber in pre-set ranges.

The ingredient composition container 55 may be provided on wheels 40, to allow easy removal from the proofing chamber 15. The ingredient composition container 55 can contain a number of shelves 45, typically removable shelves, on which the ingredient composition 50 can be placed. In Figure 1, the ingredient composition 50 is shown as multiple lozenge-shaped rolls.

The ingredient composition container 55 allows free transmission of the heat and humidity generated by the combined heat and humidity source 25 to the ingredient composition 50 held within. For instance, the ingredient composition container 55 may be open sided, or have mesh, perforated or grille walls. The ingredient composition container 55 further comprises an ultrasound source 20 for transmitting ultrasound to the ingredient composition 50. In the embodiment shown in Figure 1, the ultrasound source 20 is shown on one side of the ingredient composition container 55. However, multiple ultrasound sources may be provided, for instance on two, three or four sides of the ingredient composition container 55 to ensure that the ultrasound reaches the ingredient composition. Further ultrasound sources may be provided on one or both of the ceiling and floor of the ingredient composition container 55. In a further embodiment, the ultrasound source 20 may be directly connected to the shelves 45, to ensure efficient transmission of the ultrasound to the ingredient composition.

Figure 2 shows a schematic diagram of one heat treating apparatus 100, particularly a fryer or steamer, described herein. The fryer or steamer comprises a liquid chamber 115 for an ingredient composition. The liquid chamber 115 may be filled with a liquid heat transfer medium such as water or cooking oil, particularly a vegetable oil. When the liquid chamber 115 comprises water, the apparatus 100 may be a steamer, such as a bagel steamer. When the liquid chamber 115 comprises cooking oil, the apparatus 100 may be a fryer, such as a doughnut fryer.
One or more ultrasound sources 120 may be placed on one or both of the walls and floor of the liquid chamber 115. In the embodiment shown in Figure 2, the ultrasound source 120 is shown in the rear wall of the liquid chamber 115. It will be apparent that the liquid heat transfer medium also functions as an ultrasound coupling agent, to transmit ultrasound from the ultrasound source 120 in the chamber wall to ingredient composition suspended in the liquid chamber 115.

The heat treating apparatus 100 further comprises one or more heating elements 125, located to transmit heat to the liquid heat transfer medium in the liquid chamber 115. Control dials 130 are provided to set the temperature of the liquid chamber 115 and the power of the ultrasound generated by the ultrasound source 120. The control dials 130 can be connected to a controller (not shown) which determines the power provided to the heating element 125 and ultrasound source 120 and is configured to activate the ultrasound source 120 to transmit ultrasound to the chamber during at least a portion of the time when the heating element 125 is activated. A temperature sensor (not shown) may also be provided to measure the temperature of the liquid heat transfer medium and provide a feed-back signal to the controller.

An insulating layer 135 can be provided between the heating elements 125 and the external cladding 140 of the heating apparatus 100. One or more support legs 145 may also be provided to raise the liquid chamber 115.

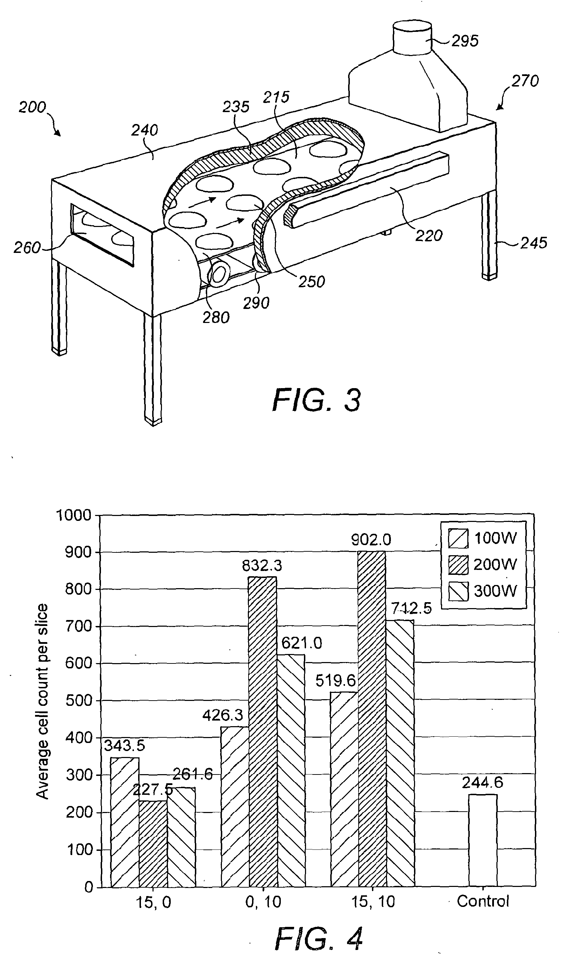

Figure 3 shows a diagrammatic scheme of a further heating apparatus 200, particularly a tunnel or travelling oven, as described herein. An insulating layer 235 defines an oven chamber 215 within. The insulating layer 235 may be covered with external cladding 240. An oven entrance 260 and an oven exit 270 are provided through the insulating layer 235 and external cladding 240. The oven chamber 235 may be supported on one or more legs 245.

The oven entrance 260 and oven exit 270 are aligned with an endless belt 280 on which the ingredient composition 250 can be placed. The endless belt is supported by a plurality of rollers 290, at least one of which is driven by a motor to convey the ingredient composition 250 from the oven entrance 260 to oven exit 270 on the endless belt 280. A heating source (not shown) is provided to heat the oven chamber. The heating source may comprise one or more heating elements. In one embodiment, the heating elements may be placed in one or more of the ceiling, floor or sides of the oven chamber 215. Typically, one or more fans are provided (not shown in Figure 3) to distribute the hot air produced by the heating elements throughout the oven chamber 215. An exhaust flue 295 is provided through the insulating layer 235 and external cladding 240 on the upper surface of the oven to allow exit of exhaust air from the oven chamber 215.

One or more ultrasound sources 220 are provided in the oven chamber 215.

In the embodiment shown in Figure 3, these are provided on the sides of the oven chamber 215 (only the near-side ultrasound source is shown). The ultrasound is transmitted to the ingredient composition during at least a portion of the time heating source is activated. This may be achieved by a controller (not shown). The ultrasound can be transmitted to the ingredient composition through the air in the oven chamber 215, with the air acting as an ultrasound coupling medium. In an alternative embodiment, the ultrasound source may be provided on the ceiling of the oven chamber 215, above the endless belt 280 and/or within the endless belt 280 itself, for instance positioned between adjacent pairs of rollers 290.

It will be apparent that the process described herein can be carried out in a variety of other heating apparatus, such as deck ovens, rack ovens and reel ovens.

The following non-limiting Examples provide embodiments of the process and apparatus disclosed herein. The effect of ultrasound was tested in the manufacture of bread. Example 1 examines the application of ultrasound during different stages in the manufacture of bread from a standard ingredient composition. Example 2 examines the application of ultrasound during different stages in the manufacture of bread from a low water ingredient composition. Example 3 examines the application of ultrasound during different stages in the manufacture of bread from a gluten-free ingredient composition. A biological leavening agent is used in Examples 1-3. Example 4 examines the application of ultrasound during different stages in the manufacture of bread from an ingredient composition comprising a chemical leavening agent.

The Examples show that the application of ultrasound improved the porosity and volume of loaves, making them more aerated with a higher lift. In addition, the texture of the sonicated bread was much improved in comparison to the control loaf. Whilst not wishing to be bound by theory, it appears that ultrasound enhances the nucleation, formation and growth of bubbles in the dough matrix.

In addition, the application of ultrasound was found to improve the crumb of a low water content bread with 90% (wt.) water content (called herein "10 wt.% less water") as discussed above. Ultrasound was also found to improve the crumb of gluten-free bread. However, in contrast to the effect on regular bread, the ultrasound expands the size of existing pores rather than generating new pores.

The benefits of the application of ultrasound are also shown to be applicable to ingredient compositions comprising a chemical leavening agent, as well as those compositions comprising a biological leavening agent.

### Experimental procedure

A Russell Hobbs breadmaker (Model 18036) was used to make bread. Ingredients were loaded into a removable tin, which was then inserted into the breadmaker. Any preheating, mixing, kneading, leavening, baking and sonication occurred within this container.

Various ingredient compositions were prepared in accordance with the recipes shown in Tables 1-3 in the Examples below. The experiments of the Examples show the effect of ultrasound on ordinary, gluten and wheat free and reduced water loaves using the timing of the 'regular' and 'gluten-free' pre-set programs of the breadmaker as templates. The durations of the pre-set programs are discussed in the relevant Examples.

The effects of ultrasound with respect to the duration of sonication, the stage in bread production during which sonication occurred and the ultrasound power were investigated. In particular, the effect of ultrasound on the leavening and early baking stages of the dough was examined. The late-baking stage during which the dough reaches temperatures exceeding 60 °C, in particular from 60 to 100 °C, was not investigated in this study.

The gluten-free cycle is much longer, so its 54 minute proof was divided into four 12 minute blocks with an additional 10 possible minutes at the start of baking. Loaves were sonicated in different combinations of these blocks, with the particular timings provided in the relevant Example. The experiments were replicated under three ultrasound powers. An unsonicated loaf of each description was also baked to allow comparison between a control loaf and the experimental loaves.

To sonicate the bread dough during a biological leavening step (proofing), the loaf tin was removed from the bread maker at the time when sonication was supposed to begin. The tin, containing dough, was covered with cling film and placed into an 25 kHz ultrasonic bath (Pulsation KS.310, Kenny's Ultrasonics Ltd.) filled with water at 40°C. A temperature controller including a temperature sensor and heating element was added to the ultrasound bath contained to allow the temperature to be maintained at 40°C. A weight placed on top of the tin kept its sides submerged. At the end of sonication the tin was reinserted into the breadmaker for the remainder of the cycle.

In these experiments, the proofing step was not carried out under control of the humidity of the environment surrounding the ingredient composition. However, the results below in which there is no control of humidity when sonication was applied during proofing show the benefits of the application of ultrasound during this step, even without humidity control, such that corresponding benefits would be observed when ultrasound is applied during proofing under humidity control.

To sonicate the bread dough during the early stages of baking, the 25 kHz ultrasound bath was used to replicate the baking conditions in the breadmaker. A temperature controller including a temperature sensor and heating element was added to the ultrasound bath, allowing temperature control of the water present. The requisite breadmaker temperature program was monitored over time with a thermocouple to provide a temperature profile which was then applied to the ultrasound bath via the temperature sensor and heating element.

Once the loaves were cooked they were removed from the breadmaker to cool. Loaves were then cut into thirds with a band saw and the crumb of each slice scanned by placing the open side facedown onto a scanner. An open sourced image-processing program called ImageJ (W. Rasband, 1997, National Institutes of Health, USA, http://rsbweb.nih.gov/ij/) was used to analyze the bread crumb by performing two analytical tests.

The cell analysis test counts and measures objects in binary or thresholded images. Scanned bread images were first converted from colour to greyscale, and the threshold level adjusted to highlight the darker pixels in a marker colour, such as red. As the darker pixels were normally present in the pores of the bread, this process accurately highlighted the holes within the crumb. For each ingredient composition (e.g. the 'regular', 'low water' and 'gluten-free' compositions), once adjusted to highlight the darker pixels, the threshold level was fixed for the remainder of the analysis. This meant that the data from different batches of foodstuff prepared from a particular ingredient composition were directly comparable. The cell analysis tool was then used to count and measure the red objects in the image, which gave a value of the number of pores in each slice.

A granulometry test was used to measure the distribution of pore sizes in each bread image. In order to perform this test the scanned bread image was converted into greyscale. The program was then used to produce a graph showing the density distribution of pores sizes in the picture as a plot of relative density versus radius of opening. A minimum radius of opening was set so that pores that were smaller than minimum radius value were considered to be outside the accuracy range (i.e. noise) of the analysis, and therefore were excluded to avoid errors. Four (4) pixels were used for all cases, with the exception of gluten-free loaves, which used eight (8) pixels. The guidelines used for interpreting the results of the granulometry test are as follows.

A maximum or high relative density value for a given radius on a curve indicates that most pores in the loaf are of that size. The steeper the fall from this maximum on the curve, the less of a presence of other pore sizes in the loaf. A curve that is more of an arc shape (i.e. multiple radii are present at densities that are close to the maximum) shows that that the there is a greater distribution of pores over a number of sizes in that loaf. A curve that is flat indicates that the loaf has an equal number of pores of all sizes. In terms of height, if one graph has consistently higher values in comparison to another graph this means it has greater density values for all its pores such that more of the loaf's area is composed of pores, regardless of size.

It can be undesirable to have a small maximum pore size. This is shown by a peak to the left of a density distribution plot. It is also undesirable to have an equal number of pores of every size because this indicates that there are similar amounts of very small as well as very large pores in the loaf. Improved porosity occurs if the maximum pore size is larger and this is indicated by a shift in the peak to the right in a density distribution plot. A loaf with an even, homogenous texture would have all pores of a similar size and this is indicated by a plot having a single, sharp peak.

### Example 1

This experiment shows the effect of ultrasound on the proofing and baking steps of a regular loaf. The ingredient composition was prepared according to a conventional recipe shown in Table 1.

The bread was produced on the machine's 'regular' program. This cycle lasts 55 minutes. The setting begins with 8 minutes of kneading during which the temperature is raised to the range of from 40 to 60 °C, followed by a 19 minute leavening (proof) at this temperature. Baking takes place in the last 28 minutes of the cycle when the temperature is raised to 130 to 150 °C over a period of 5 minutes. The temperature is then maintained in this range for the remaining 23 minutes.

**Table 1: Regular bread recipe for a 750g loaf**

| **Ingredient** | **Mass or volume** |
|---|---|
| Water | 300 g |
| Olive oil | 20 ml |
| Salt | 11 g |
| Sugar | 20.5 g |
| Strong white flour | 470 g |
| Dried milk powder | 11.5 g |
| Yeast | 9.5 g |

The regular ingredient compositions were sonicated for (i) the last 15-minutes of the proof, (ii) the first 10 minutes of baking or both (i) and (ii), at either 100, 200 or 300 watts as shown in Table 2.

**Table 2: Sonication duration and power for regular ingredient composition**

| **Power /W** | **100** | | **200** | | **300** | | **0 (Control)** | |
|---|---|---|---|---|---|---|---|---|
| **Bread stage** | Proof /min | Bake /min | Proof /min | Bake /min | Proof /min | Bake /min | Bake /min | Proof /min |
| **Loaf** | 15 | 0 | 15 | 0 | 15 | 0 | 0 | 0 |
| | 0 | 10 | 0 | 10 | 0 | 10 | | |
| | 15 | 10 | 15 | 10 | 15 | 10 | | |

In the following discussion, the loaves are identified as "control" or by the duration and power of sonication in their proof and bake periods ("power, sonication duration during proof, sonication duration during bake") e.g. '100 W, 15, 10'.

Figure 4 graphs the cell count results for cross-sections of the bread loaves, made from a conventional regular ingredient composition, subjected to different durations and powers of ultrasound during leavening and/or baking versus a control which was not subjected to any ultrasound treatment. These results show that ultrasound increases the porosity of bread, which is an effect which can improve the texture and appeal of the product. There is a correlation between the duration of ultrasound and loaf porosity: the '15, 10' sonication block most significantly affected the porosity of the bread, followed by '0, 10' and then '15, 0'. This suggests that the combination of sonication through proof and early baking yields the best results. In addition, sonication later in bread production is evidently preferable to sonication during leavening (proof). There is also a correlation between ultrasound power and the porosity of the loaves. Sonication at 200 watts generates the greatest change in porosity for the '0, 10' and '15, 10' loaves, followed by 300 watts and then 100 watts. In summary, the combination of ultrasound timing and power that produces the greatest porosity is the '15, 10' block at 200 watts.

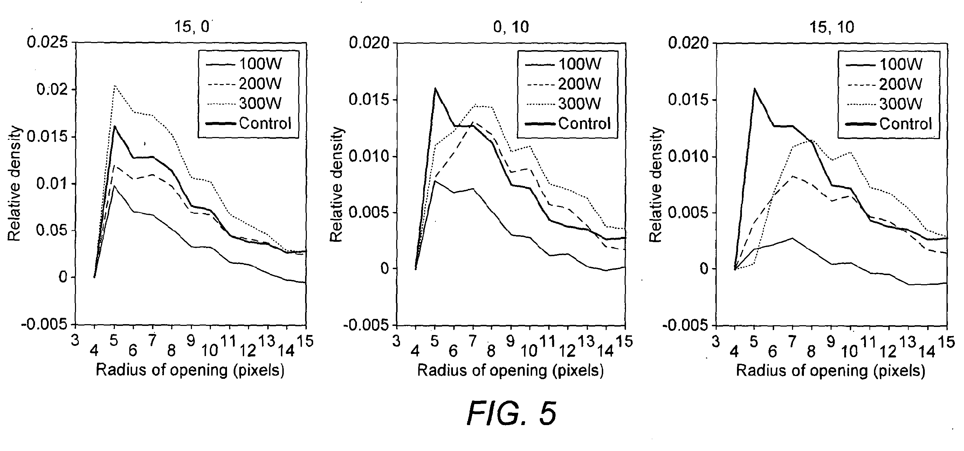

Figure 5 shows the results of the granulometry analyses for cross-sections of bread loaves, made from a conventional regular ingredient composition, subjected to different durations and powers of ultrasound during leavening and/or baking versus a control which was not subjected to any ultrasound treatment. The shape of the control and '15, 0' curves are similar. They have a sharp peak followed by a steep fall in density values. This indicates that the size distribution of pores in these loaves is minimal. This contrasts with the '5, 10' and '0, 10' loaves at powers of 100, 200 and 300 watts. The curves of these loaves are more rounded. Therefore, the spread of pore sizes in those loaves is greater.

The control and '15, 0' curves have a density maximum at 5 pixels at all powers, which means that this is the most commonly sized pore in both loaves regardless of sonication. Meanwhile, the '0, 10' and '15, 10' loaves sonicated at 100, 200 and 300 watts have a maximum density around a radius of 7 pixels. This means that the '0, 10' and '15, 10' loaves have larger pores on average.

As ultrasound power increases the heights of the loaves' granulometry curves become greater. Thus, an increase in ultrasound power corresponds to an increase of pore area in the resulting loaves. Additionally, the '0, 10' and '15, 10' loaves' curves become more parabolic as ultrasound power increases. This means that the distribution of pore sizes becomes slightly more constrained with a higher power. This higher density of pores of a few similar sizes indicates fewer unwanted large pores and very small pores.

A visual inspection of the loaves indicates that the sonicated loaf is spongier and less dense than the control. Its pores are larger and the pore size distribution is more homogeneous.
These results affirm the conclusions drawn from the cell analysis that ultrasound has a clear effect on the size and size distribution of pores in bread loaves, particularly at powers of 200 and 300 watts, and for the 15, 10 and 0, 10 blocks of sonication.

### Example 2

This experiment shows the effect of ultrasound on the proofing and early baking steps of reduced water content loaves. A low water ingredient composition was prepared by reducing the water content of the conventional composition shown in Table 1 by 10% by weight. The 10 wt.% less water ingredient composition is shown in Table 3. The 10 wt.% less water ingredient composition provided a 720 g loaf.

**Table 3: Low water content bread ingredient composition**

| **Ingredient** | **Mass or volume** |
|---|---|
| Water | 270 g |
| Olive oil | 20 ml |
| Salt | 11 g |
| Sugar | 20.5 g |
| Strong white flour | 470 g |
| Dried milk powder | 11.5 g |
| Yeast | 9.5 g |

The bread was produced from the 10 wt.% less water ingredient composition on the machine's 'regular' setting in a similar manner to Example 1.

These loaves were sonicated at 300 watts for 25 minutes, comprising 15 minutes of the leavening (proofing) step and the first 10 minutes of the baking step. The corresponding control 10 wt.% less water loafs were made from identical an ingredient composition but did not undergo any sonication.

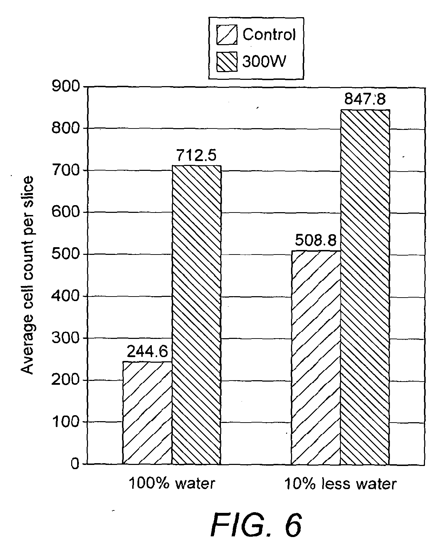

Figure 6 shows graphs of the cell count results for cross-sections of bread loaves, made from a conventional ingredient composition (100% water) and an ingredient composition with 10 wt.% less water, subjected to ultrasound (300 W) during leavening and baking versus a control which was not subjected to any ultrasound treatment. The cell analysis shows that ultrasound successfully increases the porosity of loaves with 10 wt.% less water content.

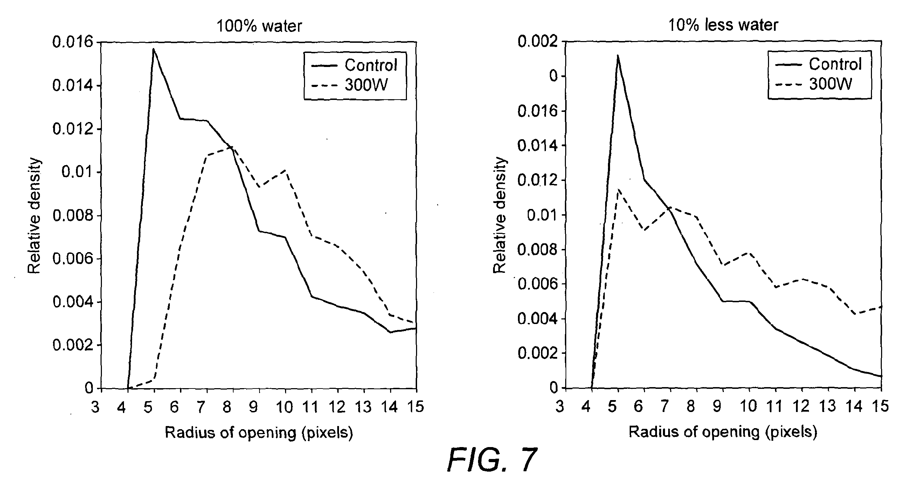

Figure 7 shows graphs of the results of granulometry analyses for cross-sections of bread loaves, made from a conventional ingredient composition (100% water) and an ingredient composition with 10 wt.% less water, subjected to different powers of ultrasound during leavening and baking versus a control which was not subjected to any ultrasound treatment. The results of the granulometry test show that the size distribution of pores is different between the control and sonicated loaves with 90% water. Additionally, the curve of the low water content sonicated loaf is very different to that of the non-sonicated loaf. The former informs of a more homogeneous distribution of pore sizes. This suggests that sonication is able to repair the effects of water deprivation on pore size distribution in a loaf to some extent.

### Example 3

This experiment shows the effect of ultrasound on the proofing and early baking steps of gluten-free loaves. The gluten-free ingredient composition was prepared according to a conventional recipe shown in Table 4.

**Table 4: Gluten-free bread ingredient composition**

| **Ingredient** | **Mass or volume** |
|---|---|
| Water | 350 g |
| Olive oil | 17.5 ml |
| Salt | 11 g |
| Sugar | 15.4 g |
| Gluten and wheat free white bread flour mix (Doves farm) | 400 g |
| Yeast | 4.8 g |

The loaves were baked using the machine's 'gluten-free' program. This program lasts 174 minutes. The cycle begins with an 8 minute pre-heating period, after which the temperature is raised to about 40 °C. The pre-heating period is followed by 4 minutes of light kneading and 19 minutes of intense kneading, again at a temperature of about 40 °C. Kneading is succeeded by a 48 minute leavening (proof) at 40 °C. After leavening, a 95 minute bake is carried out. The baking stage comprises raising the temperature to about 110 °C over the first 6 to 8 minutes of the bake and subsequently increasing the temperature to about 140 to 150 °C over the remaining 87 to 89 minutes.

For the purposes of the ultrasound application, the 48 minute leavening (proofing) step was split into four equal segments - 1, 2, 3 and 4 - and the ultrasound applied during different combinations of these segments optionally in combination with the first 10 minutes of the baking period. The various combinations of the application of ultrasound is shown in Table 5.

**Table 5: Sonication duration and power for gluten-free ingredient composition**

| Power/ W | 0 Control | | 100 | | 200 | | 300 | |
|---|---|---|---|---|---|---|---|---|
| Bread stage | Proof 1,2,3,4 | Bake | Proof 1,2,3,4 | Bake | Proof 1,2,3,4 | Bake | Proof 1,2,3,4 | Bake |
| Loaf | 0,0,0,0 | 0 | 0,0,0,12 | 10 | 0,0,0,12 | 10 | 0,0,0,12 | 10 |
| | | | 0,12,12,12 | 10 | 0,12,12,12 | 10 | 0,12,12,12 | 10 |
| | | | 12,12,12,12 | 0 | 12,12,12,12 | 0 | 12,12,12,12 | 0 |
| | | | 0,0,0,0 | 10 | 0,0,0,0 | 10 | 0,0,0,0 | 10 |

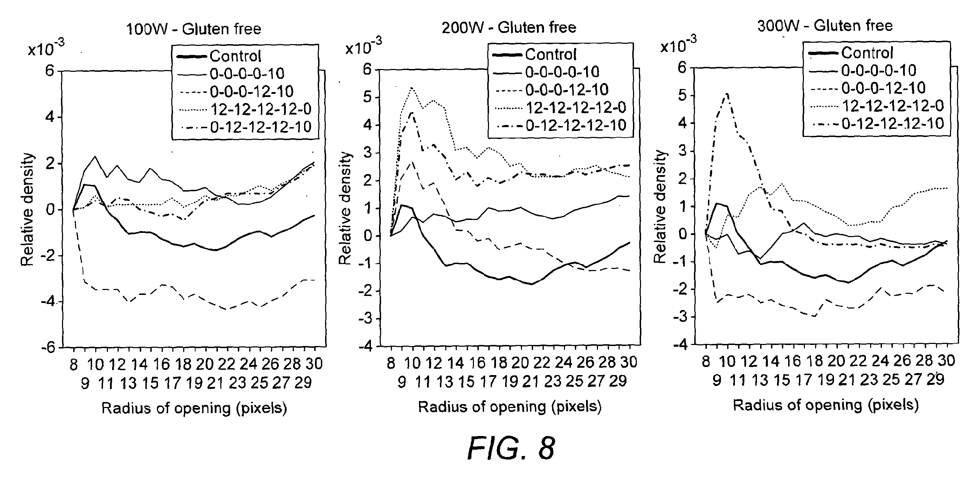

Figure 8 shows graphs of the results of granulometry analyses for cross-sections of bread loaves, made from the gluten-free ingredient composition, subjected to the different durations and powers of ultrasound during shown in Table 5. The graphs show that as ultrasound duration increases, the fraction of the loaf made up of pores increases. This is apparent because the graphs of those loaves sonicated for longer, namely the '0, 12, 12, 12, 10' and '12, 12, 12, 12, 0' samples, are placed higher than those sonicated for less time. This is accompanied by an increase in pore size apparent because the density values for larger radii increase as ultrasound duration increases.

The granulometry test also shows that an ultrasound power of 200 watts yielded loaves with the greatest fraction of porosity and largest pores. Gluten-free ingredient compositions appear to respond to ultrasound in a similar manner to regular bread; 200 watts appears to be the optimal power for improving porosity. In addition, the longer period of ultrasound application, the better the results obtained.

### Example 4

This experiment shows the effect of ultrasound on the early baking of ingredient compositions having a chemical leavening agent. Instead of the bread ingredient compositions of Examples 1-3, a scone mixture having the ingredient composition shown in Table 6 was used.

The leavening agent is a composition comprising sodium bicarbonate and sodium acid pyrophosphate. Sodium bicarbonate generates carbon dioxide gas within the ingredient composition upon heating and by reaction with an acid source provided by the sodium acid pyrophosphate in the presence of water. No biological leavening agent, such as yeast, was present in the composition.

**Table 6: Scone ingredient composition**

| **Ingredient** | **Amount (wt.%)** |
|---|---|
| Wheat flour | 55 |
| Water | 22 |
| Sugar | 8 |
| Vegetable oil | 6 |
| Milk proteins | 4 |
| Leavening agents | 3 |
| Modified starch | 1.5 |
| Emulsifier | < 1 |

The scones were baked using the machine's 'cake' program. This program lasts 60 minutes. The cycle begins with a 5 minute mixing period, followed by 10 minutes resting. This is succeeded by a 45 minute baking stage during which the temperature is raised to between 140 to 160 °C over the first 5 minutes of the bake. The temperature is then maintained within this range for the next 40 minutes.

The ingredient composition was subjected to ultrasound at a power of 300 W for the first 10 minutes of the baking step. A control scone of identical composition was prepared under the same bread maker program except no ultrasound was applied.

Both the volume and texture of the scone is significantly improved with the application of ultrasound at a power of 300 W for the first 10 minutes of the baking step. The sonicated scone presents a rounder outer shape. The non-sonicated scone presented zones of higher density when slicing the samples which 'lumped up' on the 2-D plane.

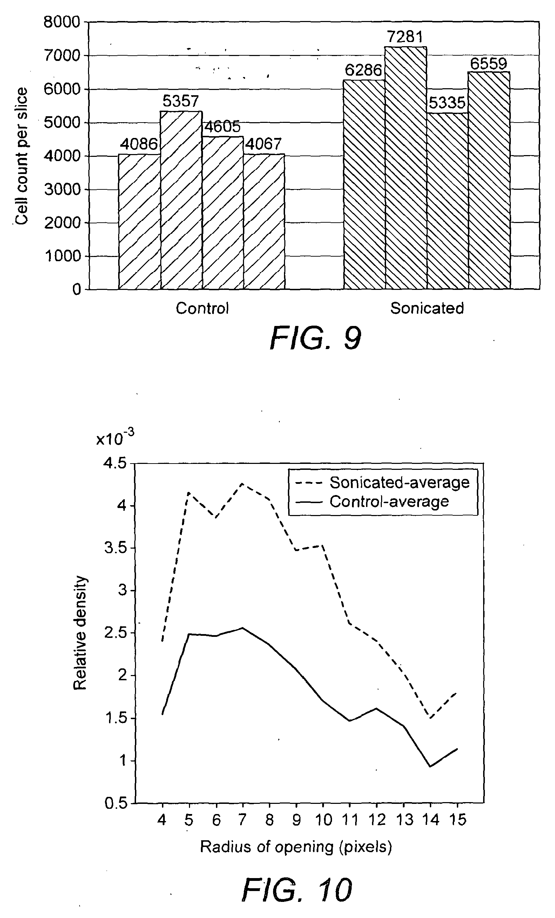

Figure 9 shows graphs of the cell count results for cross-sections of scones, made from a conventional ingredient composition having a chemical leavening agent, subjected to ultrasound during baking versus a control which was not subjected to an ultrasound treatment. The cell count is remarkably larger in the sonicated samples. This confirms that the sonicated samples have more pores. In practical terms, the sonicated scone is less collapsed and has a better formed structure of larger cells. A visual inspection of the sonicated scone confirms these results.

Figure 10 shows graphs of the results of granulometry analyses for cross-sections of scones, made from a conventional ingredient composition having a chemical leavening agent, subjected to ultrasound during baking versus a control which was not subjected to any ultrasound treatment. As in the previous study, the granulometry analysis was performed on the same binary samples used for the cell count analysis. The distribution of relative density versus radius of opening (in pixels) for both the control sample (four different slices), and the sonicated sample (four different slices) are shown. The minimum radius of opening considered was 4 pixels, in agreement with the previous Examples on ingredient compositions for bread loaves comprising yeast as the biological leavening agent.

Average values for those two series were obtained. This allows a clearer comparison of both distributions of pore sizes, which can be seen in Figure 10. The sonicated scone presents a distribution of pores with a larger relative density than that of the control scone. Consequently, the sonicated samples have larger pores which influences the texture of the scone. The scone has an increased height, as it expanded more and the structure is improved, compared to that of the non-sonicated samples. The sonicated scone also presents a larger density of smaller pores, when compared to the non-sonicated scone. This also indicates a less collapsed structure of pores, or more pores of a smaller size more noticeable to the eye and detected by the image analysis process. Therefore, chemical leavening ingredient compositions respond to ultrasound in a similar manner to those compositions presented in the previous Examples.

The person skilled in the art will understand that the present invention can be carried out in many various ways without departing from the scope of the appended claims.

**Table 6: Scone ingredient composition**

| **Ingredient** | **Amount (wt.%)** |
|---|---|
| Wheat flour | 55 |
| Water | 22 |
| Sugar | 8 |
| Vegetable oil | 6 |
| Milk proteins | 4 |
| Leavening agents | 3 |
| Modified starch | 1.5 |
| Emulsifier | < 1 |

The scones were baked using the machine's 'cake' program. This program lasts 60 minutes. The cycle begins with a 5 minute mixing period, followed by 10 minutes resting. This is succeeded by a 45 minute baking stage during which the temperature is raised to between 140 to 160 °C over the first 5 minutes of the bake. The temperature is then maintained within this range for the next 40 minutes.

The ingredient composition was subjected to ultrasound at a power of 300 W for the first 10 minutes of the baking step. A control scone of identical composition was prepared under the same bread maker program except no ultrasound was applied.

Both the volume and texture of the scone is significantly improved with the application of ultrasound at a power of 300 W for the first 10 minutes of the baking step. The sonicated scone presents a rounder outer shape. The non-sonicated scone presented zones of higher density when slicing the samples which 'lumped up' on the 2-D plane.

Figure 9 shows graphs of the cell count results for cross-sections of scones, made from a conventional ingredient composition having a chemical leavening agent, subjected to ultrasound during baking versus a control which was not subjected to an ultrasound treatment. The cell count is remarkably larger in the sonicated samples. This confirms that the sonicated samples have more pores. In practical terms, the sonicated scone is less collapsed and has a better formed structure of larger cells. A visual inspection of the sonicated scone confirms these results.

Figure 10 shows graphs of the results of granulometry analyses for cross-sections of scones, made from a conventional ingredient composition having a chemical leavening agent, subjected to ultrasound during baking versus a control which was not subjected to any ultrasound treatment. As in the previous study, the granulometry analysis was performed on the same binary samples used for the cell count analysis. The distribution of relative density versus radius of opening (in pixels) for both the control sample (four different slices), and the sonicated sample (four different slices) are shown. The minimum radius of opening considered was 4 pixels, in agreement with the previous Examples on ingredient compositions for bread loaves comprising yeast as the biological leavening agent.

Average values for those two series were obtained. This allows a clearer comparison of both distributions of pore sizes, which can be seen in Figure 10. The sonicated scone presents a distribution of pores with a larger relative density than that of the control scone. Consequently, the sonicated samples have larger pores which influences the texture of the scone. The scone has an increased height, as it expanded more and the structure is improved, compared to that of the non-sonicated samples. The sonicated scone also presents a larger density of smaller pores, when compared to the non-sonicated scone. This also indicates a less collapsed structure of pores, or more pores of a smaller size more noticeable to the eye and detected by the image analysis process. Therefore, chemical leavening ingredient compositions respond to ultrasound in a similar manner to those compositions presented in the previous Examples.

The person skilled in the art will understand that the present invention can be carried out in many various ways without departing from the scope of the appended claims.

## Claims

1. A process for the manufacture of a leavened foodstuff, comprising at least:
A) treating an ingredient composition comprising food structurant selected from the group comprising protein, polymeric carbohydrate and hydrocolloid, water and a leavening agent, said ingredient composition being a dough or batter, with ultrasound from an ultrasound source to modify the gas cell structure developing in the ingredient composition during at least a part of a leavening step to provide a leavened ingredient composition as the leavened foodstuff, wherein said ultrasound has a frequency in the range of from 20 kHz to 200 kHz and a power in the range of greater than 50 W to 1 kW and wherein when the leavening agent is a biological leavening agent, the leavening step further comprises the step of controlling the relative humidity of the environment surrounding the ingredient composition such that it is greater than 30%, and/or
B) i) treating an ingredient composition comprising food structurant selected from the group comprising protein, polymeric carbohydrate and hydrocolloid, water and a leavening agent, said ingredient composition being a dough or batter or ii) a leavened ingredient composition having a gas cell structure and comprising a food structurant selected from the group comprising protein, polymeric carbohydrate and hydrocolloid and water, said leavened ingredient composition being a dough or batter with ultrasound from an ultrasound source to modify the gas cell structure developing in the ingredient composition or to modify the gas cell structure of the leavened ingredient composition during at least a part of a heat treating step to provide a heat treated leavened foodstuff, wherein said ultrasound has a frequency in the range of from 20 kHz to 200 kHz and a power in the range of greater than 50 W to 1 kW.

2. The process of claim 1 wherein the leavening agent is selected from one or both of a chemical leavening agent and a biological leavening agent.

3. The process of claim 1, wherein the leavened ingredient composition in B ii) is provided by the steps of:
providing an ingredient composition comprising food structurant selected from the group comprising protein, polymeric carbohydrate and
hydrocolloid, water and a leavening agent, wherein said ingredient composition is a dough or batter; and
leavening the ingredient composition to develop a gas cell structure in the ingredient composition to provide the leavened ingredient composition having a gas cell structure and comprising food structurant, water and
optionally any remaining leavening agent.

4. The process of claim 3, wherein the ingredient composition is subjected to ultrasound treatment during at least a part of the leavening step.

5. The process of claim 4 wherein the ingredient composition is subjected to ultrasound treatment during at least the final 25%, by duration, of the leavening step.

6. The process of claim 1 wherein the leavening agent in the ingredient composition is heat activated such that the ingredient composition will undergo leavening during the heat treating step to provide a heat treated leavened foodstuff.

7. The process of claim 1 wherein the ingredient composition of A) is subjected to ultrasound treatment during at least the final 25%, by time, of the leavening step.

8. The process of claim 1 A) or claim 7 further comprising the step of: heat treating the leavened ingredient composition to provide a heat treated leavened composition.

9. The process of claim 8, wherein the leavened ingredient composition is subjected to ultrasound treatment during at least a part of the heat treating step.

10. The process of any of the preceding claims wherein the leavening agent comprises one or both of a biological leavening agent and a chemical leavening agent.

11. The process of claim 10 wherein the leavening agent comprises a biological leavening agent and the step of controlling the relative humidity of the environment surrounding the ingredient composition controls the relative humidity in a range of from 70% to 90%.

12. The process of claim 10 or claim 11 wherein the biological leavening agent is one or more selected from the group comprising a yeast such as one of the genus Saccharomyces and a bacterium such as one of the lactic or acetic acid bacteria.

13. The process of claim 12 wherein the leavening agent comprises a chemical leavening agent comprising a compound selected from the group comprising ammonium bicarbonate, potassium bicarbonate, sodium bicarbonate, potassium bitartrate, potassium carbonate, monocalcium phosphate, sodium acid pyrophosphate, sodium aluminium pyrophosphate, di-calcium dihydro phosphate and hydrogen peroxide.

14. The process of claim 13 wherein the chemical leavening agent further comprises an acidic compound, such as an organic acid.

15. The process of any of the proceeding claims wherein the ingredient composition does not comprise gluten such that the ingredient composition is a gluten-free ingredient composition.

16. The process of any of the preceding claims in which the process is carried out without any mechanical manipulation to alter the developing gas cell structure or cell structure.

17. The process of any of the preceding claims wherein the food structurant is selected from the group comprising protein selected from albumin, casein, gluten or gelatin, polymeric carbohydrate selected from starch or cellulose, and hydrocolloid selected from a gum.

18. The process of any of the preceding claims, wherein the modification of the gas cell structure comprises increasing the homogeneity of the gas cell structure.

19. Use of the heat treating apparatus to carry out the process of claim 1for the manufacture of a foodstuff comprising at least a chamber for an ingredient composition, means for heating the chamber, means for controlling the temperature of the chamber, an ultrasound source for transmitting ultrasound to the chamber, wherein said ultrasound has a frequency in the range of from 20 kHz to 200 kHz and a power in the range of greater than 50 W to 1 kW, and a control system, said control system configured to transmit ultrasound to the chamber from the ultrasound source during at least a portion of the heating of the chamber - by said means for heating the chamber.

20. Use of the proofing apparatus for an ingredient composition to carry out the process of claim 1 comprising at least a chamber for an ingredient composition, means for controlling the temperature of the chamber, means for controlling the humidity in the chamber to a relative humidity of greater than 30% and an ultrasound source for transmitting ultrasound to the chamber, wherein said ultrasound has a frequency in the range of from 20 kHz to 200 kHz and a power in the range of greater than 50 W to 1 kW.

## Patentansprüche

1. Ein Verfahren zur Herstellung eines gesäuerten Nahrungsmittels, beinhaltend mindestens das Folgende:
A) Behandeln einer Bestandteilzusammensetzung, beinhaltend ein Lebensmittelstrukturierungsmittel, ausgewählt aus der Gruppe, beinhaltend Protein, polymeres Kohlenhydrat und Hydrokolloid, Wasser und ein Backtriebmittel, wobei die Bestandteilzusammensetzung ein Teig oder Rührteig ist, mit Ultraschall aus einer Ultraschallquelle zum Modifizieren der Gaszellenstruktur, welche sich während mindestens eines Teils eines Ansäuerungsschritts in der Bestandteilzusammensetzung entwickelt, um eine gesäuerte Bestandteilzusammensetzung als gesäuertes Nahrungsmittel bereitzustellen, wobei der Ultraschall eine Frequenz im Bereich von 20 kHz bis 200 kHz und eine Leistung im Bereich von mehr als 50 W bis 1 kW aufweist, und wobei, wenn das Backtriebmittel ein biologisches Backtriebmittel ist, der Ansäuerungsschritt weiterhin den Schritt des Steuerns der relativen Feuchtigkeit in der Umgebung der Bestandteilzusammensetzung beinhaltet, so dass sie mehr als 30 % beträgt, und/oder
B) i) Behandeln einer Bestandteilzusammensetzung, beinhaltend ein Lebensmittelstrukturierungsmittel, ausgewählt aus der Gruppe, beinhaltend Protein, polymeres Kohlenhydrat und Hydrokolloid, Wasser und ein Backtriebmittel, wobei die Bestandteilzusammensetzung ein Teig oder Rührteig ist, oder ii) eine gesäuerte Bestandteilzusammensetzung mit einer Gaszellenstruktur und beinhaltend ein Lebensmittelstrukturierungsmittel, ausgewählt aus der Gruppe, beinhaltend Protein, polymeres Kohlenhydrat und Hydrokolloid und Wasser, wobei die gesäuerte Bestandteilzusammensetzung ein Teig oder Rührteig ist, mit Ultraschall aus einer Ultraschallquelle zum Modifizieren der Gaszellenstruktur, welche sich während mindestens eines Teils eines Erwärmungsschritts entwickelt, um ein wärmebehandeltes, gesäuertes Nahrungsmittel bereitzustellen, wobei der Ultraschall eine Frequenz im Bereich von 20 kHz bis 200 kHz und eine Leistung im Bereich von mehr als 50 W bis 1 kW aufweist.

2. Verfahren gemäß Anspruch 1, wobei das Backtriebmittel aus einem oder beiden von einem chemischen Backtriebmittel und einem biologischen Backtriebmittel ausgewählt ist.

3. Verfahren gemäß Anspruch 1, wobei die gesäuerte Bestandteilzusammensetzung aus B ii) durch die folgenden Schritte bereitgestellt wird:
Bereitstellen einer Bestandteilzusammensetzung, beinhaltend ein Lebensmittelstrukturierungsmittel, ausgewählt aus der Gruppe, beinhaltend Protein, polymeres Kohlenhydrat und Hydrokolloid, Wasser und ein Backtriebmittel, wobei die Bestandteilzusammensetzung ein Teig oder Rührteig ist; und
Ansäuern der Bestandteilzusammensetzung zur Entwicklung einer Gaszellenstruktur in der Bestandteilzusammensetzung, um die gesäuerte Bestandteilzusammensetzung mit einer Gaszellenstruktur bereitzustellen, und beinhaltend ein Lebensmittelstrukturierungsmittel, Wasser und gegebenenfalls jegliches verbleibendes Backtriebmittel.

4. Verfahren gemäß Anspruch 3, wobei die Bestandteilzusammensetzung während mindestens eines Teils des Ansäuerungsschritts einer Ultraschallbehandlung unterzogen wird.

5. Verfahren gemäß Anspruch 4, wobei der Bestandteilzusammensetzung während mindestens der letzten 25 % der Dauer des Ansäuerungsschritts einer Ultraschallbehandlung unterzogen wird.

6. Verfahren gemäß Anspruch 1, wobei das Backtriebmittel in der Bestandteilzusammensetzung wärmeaktiviert wird, so dass die Bestandteilzusammensetzung während des Wärmebehandlungsschritts einer Ansäuerung unterzogen wird, um ein wärmebehandeltes gesäuertes Nahrungsmittel bereitzustellen.

7. Verfahren gemäß Anspruch 1, wobei die Bestandteilzusammensetzung aus A) während mindestens der letzten 25 % der Dauer des Ansäuerungsschritts einer Ultraschallbehandlung unterzogen wird.

8. Verfahren gemäß Anspruch 1 A) oder Anspruch 7, weiterhin beinhaltend den folgenden Schritt:
Wärmebehandeln der gesäuerten Bestandteilzusammensetzung, um eine wärmebehandelte gesäuerte Zusammensetzung bereitzustellen.

9. Verfahren gemäß Anspruch 8, wobei die gesäuerte Bestandteilzusammensetzung während mindestens eines Teils des Wärmebehandlungsschritts einer Ultraschallbehandlung unterzogen wird.

10. Verfahren gemäß einem der vorhergehenden Ansprüche, wobei das Backtriebmittel eines oder beide von einem biologischen Backtriebmittel und einem chemischen Backtriebmittel beinhaltet.

11. Verfahren gemäß Anspruch 10, wobei das Backtriebmittel ein biologisches Backtriebmittel beinhaltet und der Schritt des Steuerns der relativen Feuchtigkeit der Umgebung der Bestandteilzusammensetzung die relative Feuchtigkeit in einem Bereich von 70 % bis 90 % steuert.

12. Verfahren gemäß Anspruch 10 oder Anspruch 11, wobei das biologische Backtriebmittel ein oder mehrere Backtriebmittel ist, das/die ausgewählt ist/sind aus der Gruppe, beinhaltend eine Hefe wie eine der Gattung Saccharomyces und ein Bakterium, wie eines der Milch- oder Essigsäurebakterien.

13. Verfahren gemäß Anspruch 12, wobei das Backtriebmittel ein chemisches Backtriebmittel beinhaltet, das eine Verbindung beinhaltet, ausgewählt aus der Gruppe, beinhaltend Ammoniumbicarbonat, Kaliumbicarbonat, Natriumbicarbonat, Kaliumbitartrat, Kaliumcarbonat, Monocalciumphosphat, Dinatriumdihydrogendiphosphat, Natrium-Aluminium-Pyrophosphat, Dicalciumdihydrophosphat und Wasserstoffperoxid.

14. Verfahren gemäß Anspruch 13, wobei das chemische Backtriebmittel weiterhin eine saure Verbindung, wie eine organische Säure, beinhaltet.

15. Verfahren gemäß einem der vorhergehenden Ansprüche, wobei die Bestandteilzusammensetzung kein Gluten beinhaltet, so dass die Bestandteilzusammensetzung eine glutenfreie Bestandteilzusammensetzung ist.

16. Verfahren gemäß einem der vorhergehenden Ansprüche, wobei das Verfahren ohne jegliche mechanische Manipulation zum Verändern der sich entwickelnden Gaszellenstruktur oder Zellenstruktur durchgeführt wird.

17. Verfahren gemäß einem der vorhergehenden Ansprüche, wobei das Nahrungsmittelstrukturierungsmittel ausgewählt ist aus der Gruppe beinhaltend Protein, ausgewählt aus Albumin, Casein, Gluten oder Gelatine, polymerem Kohlenhydrat ausgewählt aus Stärke oder Cellulose, und Hydrokolloid, ausgewählt aus einem Gummi.

18. Verfahren gemäß einem der vorhergehenden Ansprüche, wobei die Modifikation der Gaszellenstruktur das Erhöhen der Homogenität der Gaszellenstruktur beinhaltet.

19. Eine Verwendung der Wärmebehandlungsvorrichtung zum Durchführen des Verfahrens gemäß Anspruch 1 zur Herstellung eines Lebensmittels, beinhaltend mindestens eine Kammer für eine Bestandteilzusammensetzung, Mittel zum Erwärmen der Kammer, Mittel zur Steuerung der Temperatur der Kammer, eine Ultraschallquelle zum Übertragen von Ultraschall in die Kammer, wobei der Ultraschall eine Frequenz im Bereich von 20 kHz bis 200 kHz und eine Leistung im Bereich von mehr als 50 W bis 1 kW aufweist, und ein Steuersystem, wobei das Steuersystem zum Übertragen von Ultraschall von der Ultraschallquelle in die Kammer während mindestens eines Teils des Erwärmens der Kammer - mittels des Mittels zum Erwärmen der Kammer - konfiguriert ist.

20. Eine Verwendung der Gärungsvorrichtung für eine Bestandteilzusammensetzung zum Durchführen des Verfahrens gemäß Anspruch 1, beinhaltend mindestens eine Kammer für eine Bestandteilzusammensetzung, Mittel zum Steuern der Temperatur der Kammer, Mittel zum Steuern der Feuchtigkeit in der Kammer auf eine relative Feuchtigkeit von mehr als 30 % und eine Ultraschallquelle zum Übertragen von Ultraschall in die Kammer, wobei der Ultraschall eine Frequenz im Bereich von 20 kHz bis 200 kHz und eine Leistung im Bereich von mehr als 50 W bis 1 kW aufweist.

## Revendications

1. Un procédé pour la fabrication d'un aliment au levain, comprenant au moins :
A) le traitement d'une composition d'ingrédient comprenant un agent structurant alimentaire sélectionné dans le groupe comprenant une protéine, un hydrate de carbone polymérique et un hydrocolloïde, de l'eau et un agent levant, ladite composition d'ingrédient étant une pâte ou une pâte à frire, avec des ultrasons provenant d'une source d'ultrasons afin de modifier la structure de cellule gazeuse qui se développe dans la composition d'ingrédient durant au moins une partie d'une étape de levage afin de fournir une composition d'ingrédient au levain en tant qu'aliment au levain, dans lequel lesdits ultrasons ont une fréquence comprise dans la gamme allant de 20 kHz à 200 kHz et une puissance comprise dans la gamme allant de plus de 50 W à 1 kW et dans lequel lorsque l'agent levant est un agent levant biologique, l'étape de levage comprend en outre l'étape consistant à contrôler l'humidité relative de l'environnement entourant la composition d'ingrédient de telle sorte qu'elle soit supérieure à 30 %, et/ou
B) i) le traitement d'une composition d'ingrédient comprenant un agent structurant alimentaire sélectionné dans le groupe comprenant une protéine, un hydrate de carbone polymérique et un hydrocolloïde, de l'eau et un agent levant, ladite composition d'ingrédient étant une pâte ou une pâte à frire, ou ii) d'une composition d'ingrédient au levain ayant une structure de cellule gazeuse et comprenant un agent structurant alimentaire sélectionné dans le groupe comprenant une protéine, un hydrate de carbone polymérique et un hydrocolloïde et de l'eau, ladite composition d'ingrédient au levain étant une pâte ou une pâte à frire avec des ultrasons provenant d'une source d'ultrasons afin de modifier la structure de cellule gazeuse qui se développe dans la composition d'ingrédient ou afin de modifier la structure de cellule gazeuse de la composition d'ingrédient au levain durant au moins une partie d'une étape de traitement thermique afin de fournir un aliment au levain thermo-traité, dans lequel lesdits ultrasons ont une fréquence comprise dans la gamme allant de 20 kHz à 200 kHz et une puissance comprise dans la gamme allant de plus de 50 W à 1 kW.

2. Le procédé de la revendication 1 dans lequel l'agent levant est sélectionné parmi soit un agent levant chimique, soit un agent levant biologique, soit les deux.

3. Le procédé de la revendication 1, dans lequel la composition d'ingrédient au levain dans B ii) est fournie par les étapes consistant à :
fournir une composition d'ingrédient comprenant un agent structurant alimentaire sélectionné dans le groupe comprenant une protéine, un hydrate de carbone polymérique et un hydrocolloïde, de l'eau et un agent levant, ladite composition d'ingrédient étant une pâte ou une pâte à frire ; et
lever la composition d'ingrédient afin de développer une structure de cellule gazeuse dans la composition d'ingrédient afin de fournir la composition d'ingrédient au levain ayant une structure de cellule gazeuse et comprenant un agent structurant alimentaire, de l'eau et facultativement tout agent levant restant.

4. Le procédé de la revendication 3, dans lequel la composition d'ingrédient est soumise à un traitement par ultrasons durant au moins une partie de l'étape de levage.

5. Le procédé de la revendication 4 dans lequel la composition d'ingrédient est soumise à un traitement par ultrasons durant au moins les derniers 25 %, en durée, de l'étape de levage.

6. Le procédé de la revendication 1 dans lequel l'agent levant dans la composition d'ingrédient est thermo-activé de telle sorte que la composition d'ingrédient subira un levage durant l'étape de traitement thermique afin de fournir un aliment au levain thermo-traité.

7. Le procédé de la revendication 1 dans lequel la composition d'ingrédient de A) est soumise à un traitement par ultrasons durant au moins les derniers 25 %, en temps, de l'étape de levage.

8. Le procédé de la revendication 1 A) ou de la revendication 7 comportant en outre l'étape consistant à :
thermo-traiter la composition d'ingrédient au levain afin de fournir une composition au levain thermo-traitée.

9. Le procédé de la revendication 8, dans lequel la composition d'ingrédient au levain est soumise à un traitement par ultrasons durant au moins une partie de l'étape de traitement thermique.

10. Le procédé de n'importe lesquelles des revendications précédentes dans lequel l'agent levant comprend soit un agent levant biologique, soit un agent levant chimique, soit les deux.

11. Le procédé de la revendication 10 dans lequel l'agent levant comprend un agent levant biologique et l'étape consistant à contrôler l'humidité relative de l'environnement entourant la composition d'ingrédient contrôle l'humidité relative comprise dans une gamme allant de 70 % à 90 %.

12. Le procédé de la revendication 10 ou de la revendication 11 dans lequel l'agent levant biologique est un ou plusieurs éléments sélectionnés dans le groupe comprenant une levure telle qu'une levure du genre Saccharomyces et une bactérie telle qu'une bactérie parmi la bactérie lactique ou d'acide acétique.

13. Le procédé de la revendication 12 dans lequel l'agent levant comprend un agent levant chimique comprenant un composé sélectionné dans le groupe comprenant du bicarbonate d'ammonium, du bicarbonate de potassium, du bicarbonate de sodium, du bitartrate de potassium, du carbonate de potassium, du phosphate monocalcique, du pyrophosphate acide de sodium, du pyrophosphate d'aluminium et de sodium, du dihydro phosphate dicalcique et du peroxyde d'hydrogène.

14. Le procédé de la revendication 13 dans lequel l'agent levant chimique comprend en outre un composé acide, tel qu'un acide organique.

15. Le procédé de n'importe lesquelles des revendications précédentes dans lequel la composition d'ingrédient ne comprend pas de gluten de telle sorte que la composition d'ingrédient soit une composition d'ingrédient dépourvue de gluten.

16. Le procédé de n'importe lesquelles des revendications précédentes, le procédé étant réalisé sans aucune manipulation mécanique altérant la structure de cellule gazeuse en développement ou la structure de cellule.

17. Le procédé de n'importe lesquelles des revendications précédentes dans lequel l'agent structurant alimentaire est sélectionné dans le groupe comprenant une protéine sélectionnée parmi l'albumine, la caséine, le gluten ou la gélatine, l'hydrate de carbone polymérique sélectionné parmi l'amidon ou la cellulose, et un hydrocolloïde sélectionné parmi une gomme.

18. Le procédé de n'importe lesquelles des revendications précédentes, dans lequel la modification de la structure de cellule gazeuse comprend l'augmentation de l'homogénéité de la structure de cellule gazeuse.

19. Utilisation de l'appareil de traitement thermique afin de réaliser le procédé de la revendication 1 pour la fabrication d'un aliment comprenant au moins une chambre pour une composition d'ingrédient, un moyen pour chauffer la chambre, un moyen pour contrôler la température de la chambre, une source d'ultrasons pour émettre des ultrasons jusqu'à la chambre, lesdits ultrasons ayant une fréquence comprise dans la gamme allant de 20 kHz à 200 kHz et une puissance comprise dans la gamme allant de plus de 50 W à 1 kW, et un système de contrôle, ledit système de contrôle étant configuré pour émettre des ultrasons jusqu'à la chambre depuis la source d'ultrasons durant au moins une portion du chauffage de la chambre par ledit moyen pour chauffer la chambre.

20. Utilisation de l'appareil d'épreuve pour une composition d'ingrédient afin de réaliser le procédé de la revendication 1 comprenant au moins une chambre pour une composition d'ingrédient, un moyen pour contrôler la température de la chambre, un moyen pour contrôler l'humidité dans la chambre pour atteindre une humidité relative supérieure à 30 % et une source d'ultrasons pour émettre des ultrasons jusqu'à la chambre, lesdits ultrasons ayant une fréquence comprise dans la gamme allant de 20 kHz à 200 kHz et une puissance comprise dans la gamme allant de plus de 50 W à 1 kW.
